# EUROPEAN PATENT APPLICATION

(11) **EP 4 254 843 A1**
(43) Date of publication of application: **04.10.2023**
(21) Application number: 20966510.8
(22) Date of filing: 24.12.2020
(51) Int. Cl.: H04L 1/22

(54) **FLEXIBLE ETHERNET OVERHEAD FRAME PROCESSING METHOD AND APPARATUS**

(71) Applicant: Huawei Technologies Co., Ltd., Shenzhen, Guangdong 518129 (CN)
(72) Inventor: SUN, Hongliang, Shenzhen, Guangdong 518129 (CN); CHEN, Jingfeng, Shenzhen, Guangdong 518129 (CN); LIU, Yongzhi, Shenzhen, Guangdong 518129 (CN)
(74) Representative: Körber, Martin Hans
(86) International application number: PCT/CN2020/139132
(87) International publication number: WO 2022/133938

(57) **Abstract**

This application provides a flexible Ethernet overhead frame processing method and apparatus, to reduce impact of a PHY in a faulty state on a service data flow carried on a PHY in a normal state in a FlexE group. The method is applied to a network device including a main board and a standby board. The method includes: The main board sends first indication information to the standby board, where the first indication information indicates a phase of a first overhead frame of the service data flow carried on a first PHY of the main board. The standby board receives the first indication information, and determines, based on the phase of the first overhead frame, a phase of a second overhead frame of the service data flow carried on a second PHY of the standby board, where the second overhead frame is a next overhead frame of the first overhead frame.

## Description

### TECHNICAL FIELD

This application relates to the field of communication technologies, and in particular, to a flexible Ethernet overhead frame processing method and apparatus.

### BACKGROUND

A flexible Ethernet (flexible Ethernet, FlexE) technology is a low-cost and high-reliability carrier-class interface technology implemented based on a high-speed Ethernet (Ethernet) interface by decoupling an Ethernet media access control (media access control, MAC) layer from a physical layer. In the FlexE technology, a flexible FlexE shim (FlexE shim) layer is introduced based on IEEE 802.3 to decouple a MAC layer from a physical layer, thereby implementing flexible rate matching.

The FlexE technology binds multiple Ethernet physical layers (physical layer, PHY) into a flexible Ethernet group (FlexE group) and provides functions such as physical layer channelization, thereby meeting port application requirements of flexible bandwidth. Therefore, a MAC rate provided by the FlexE may be higher than a rate of a single PHY (this is implemented through binding), or may be lower than the rate of the single PHY (this is implemented through channelization).

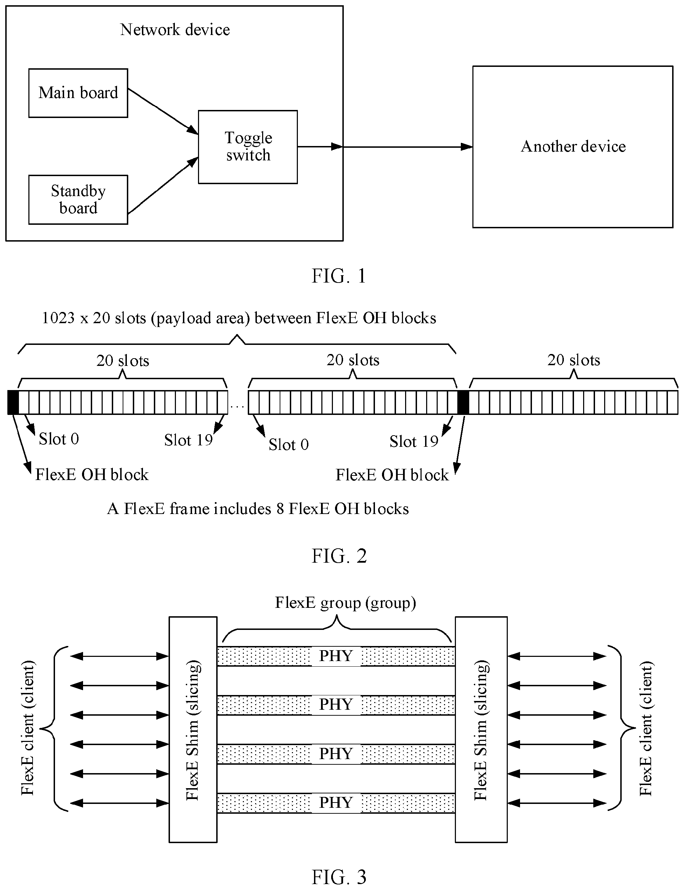

According to a current FlexE standard and a solution in the related prior art, for a network device that has a security assurance requirement in FlexE, as shown in FIG. 1, the network device mainly implements transmission of a service data flow by a protection switching mechanism of a main board and a standby board. Specifically, both the main board and the standby board in the network device send the service data flow through the FlexE group; when the main board works normally, a toggle switch selects the service data flow carried on the FlexE group of the main board and sends the service data flow to another device; when one or more PHYs in the FlexE group of the main board are in a faulty state, the toggle switch selects the service data flow carried on the FlexE group of the standby board and sends the service data flow to another device.

However, the foregoing protection switching mechanism causes interruption of a service data flow carried on a PHY that works normally in the FlexE group of the main board, and the interruption duration may reach dozens of milliseconds, thereby causing damage to the service data flow carried on the PHY that works normally. Therefore, how to reduce impact of a PHY in a faulty state on a service data flow carried on a PHY in a normal state in a FlexE group becomes an urgent problem to be resolved currently.

### SUMMARY

This application provides a flexible Ethernet overhead frame processing method and apparatus, to reduce impact of a PHY in a faulty state on a service data flow carried on a PHY in a normal state in a FlexE group.

To achieve the foregoing objective, the following technical solutions are used in embodiments of this application.

According to a first aspect, a flexible Ethernet overhead frame processing method is provided, where the method is applied to a network device including a main board and a standby board. The method includes: The main board sends first indication information to the standby board, where the first indication information indicates a phase of a first overhead frame of a service data flow carried on a first physical layer interface PHY of the main board. A first FlexE group may correspond to the main board and a network, and may include a plurality of PHYs. A first PHY may be any one of the plurality of PHYs bound to the first FlexE group. The standby board receives the first indication information, and determines a phase of a second overhead frame of the service data flow carried on a second PHY of the standby board based on the phase of the first overhead frame, where the second overhead frame is a next overhead frame of the first overhead frame. A second FlexE group may correspond to the standby board and the network. The second PHY may be a PHY that is in the plurality of PHYs bound to the second FlexE group and that is used to carry the service data flow. In other words, the service data flow carried on the second PHY and the service data flow carried on the first PHY are a same service data flow.

In the foregoing technical solution, after the standby board determines the phase of the second overhead frame of the service data flow on the second PHY based on the phase of the first overhead frame, the phase of the overhead frame of the service data flow on the standby board may be tracked and aligned with the phase of the overhead frame of the service data flow on the main board. In this way, when the main board is faulty, the first network device may send the service data flow to the second network device through the standby board. Because the phases of the overhead frames of the service data flows sent by the main board and the standby board are aligned, the second network device may still lock the overhead frames in the service data flows, thereby reducing impact of damage to service data flows on other PHYs that work normally due to a fault of a PHY in the main board.

In a possible implementation of the first aspect, the method further includes: The main board sends the service data flow on the first PHY at the phase of the first overhead frame when the main board is not faulty. The standby board sends the service data flow on the second PHY at the phase of the second overhead frame when the main board is faulty. In the foregoing possible implementation, when the main board is faulty, the first network device may send the service data flow to the second network device through the standby board. Because the phases of the overhead frames of the service data flows sent by the main board and the standby board are aligned, the second network device may still lock the overhead frames in the service data flows, thereby reducing impact of damage to service data flows on other PHYs that work normally due to a fault of a PHY in the main board.

In a possible implementation of the first aspect, the first indication information is information encoded in a single-bit encoding format. Optionally, the first indication information includes a frame header location of the first overhead frame. Further, the first indication information further includes at least one of the following: an encoding version number or feature information of the first overhead frame. In the foregoing possible implementation, efficiency of determining the first overhead frame by the standby board can be improved.

In a possible implementation of the first aspect, the first indication information further includes a cyclic redundancy check CRC8, and the CRC8 is used to check the encoding version number and/or the feature information of the first overhead frame. In the foregoing possible implementation, the encoding version number and/or the feature information of the first overhead frame are/is checked by the CRC8, so that security of the foregoing information can be improved.

In a possible implementation of the first aspect, that the standby board determines the phase of the second overhead frame of the service data flow on the second PHY based on the phase of the first overhead frame includes: The standby board determines a frame header location of the second overhead frame on the first PHY based on the frame header location of the first overhead frame and an overhead frame interval. Based on the frame header location of the second overhead frame on the first PHY, the phase of the second overhead frame of the service data flow carried on the second PHY that is on the standby board is determined. In the foregoing possible implementation, a simple and effective manner of determining the phase of the second overhead frame on the standby board is provided.

In a possible implementation of the first aspect, the method further includes: The standby board compensates, based on an inter-board transmission delay and/or an encoding/decoding delay, for the phase of the second overhead frame of the service data flow carried on the second PHY that is on the standby board. In the foregoing possible implementation, accuracy of the phase of the second overhead frame on the standby board is improved.

In a possible implementation of the first aspect, the feature information includes a padding block PAD phase, and the method further includes: determining, based on the PAD phase, a PAD phase of the service data flow in the second overhead frame on the second PHY; and/or the feature information further includes an alignment marker AM phase, and the method further includes: determining, based on the AM phase, an AM phase of the service data flow in the second overhead frame on the second PHY In the foregoing possible implementation, the standby board can ensure, based on the foregoing manner, that the PAD phase and the AM phase of the second overhead frame on the first PHY of the main board are respectively aligned with the PAD phase and the AM phase of the second overhead frame on the second PHY of the standby board, thereby ensuring consistency of insertion of the PAD and the AM by the main board and the standby board.

In a possible implementation of the first aspect, the method further includes: The standby board determines a frame header phase deviation between the main board and the standby board based on a frame header of a same overhead frame of the service data flow carried on the first PHY and the second PHY The standby board triggers alarm information when the frame header phase deviation is greater than a preset deviation. In the foregoing possible implementation, the standby board sends the alarm information to a processor in the network device, so that the overhead frame is realigned between the main board and the standby board.

According to a second aspect, a flexible Ethernet overhead frame processing apparatus is provided, where the apparatus includes a main board and a standby board. The main board is configured to send first indication information to the standby board, where the first indication information indicates a phase of a first overhead frame of a service data flow carried on a first physical layer interface PHY of the main board. The standby board is configured to receive the first indication information, and determine, based on the phase of the first overhead frame, a phase of a second overhead frame of the service data flow carried on a second PHY of the standby board, where the second overhead frame is a next overhead frame of the first overhead frame.

In a possible implementation of the second aspect, the main board is further configured to: send, by the main board, the service data flow on the first PHY at the phase of the first overhead frame when the main board is not faulty; and the standby board is further configured to: send, by the standby board, the service data flow on the second PHY at the phase of the second overhead frame when the main board is faulty.

In a possible implementation of the second aspect, the first indication information is information encoded in a single-bit encoding format.

In a possible implementation of the second aspect, the first indication information includes a frame header location of the first overhead frame.

In a possible implementation of the second aspect, the standby board is further configured to: determine, based on the frame header location of the first overhead frame and an overhead frame interval, a frame header location of the second overhead frame on the first PHY; and determine, based on the frame header location of the second overhead frame on the first PHY, the phase of the second overhead frame of the service data flow carried on the second PHY that is on the standby board.

In a possible implementation of the second aspect, the standby board is further configured to compensate, based on an inter-board transmission delay and/or an encoding/decoding delay, for the phase of the second overhead frame of the service data flow carried on the second PHY

In a possible implementation of the second aspect, the first indication information further includes at least one of the following: an encoding version number or feature information of the first overhead frame.

In a possible implementation of the second aspect, the first indication information further includes a cyclic redundancy check CRC8, and the CRC8 is used to check the encoding version number and/or the feature information of the first overhead frame.

In a possible implementation of the second aspect, the feature information includes a padding block PAD phase, and the standby board is further configured to: determine, based on the PAD phase, a PAD phase of the service data flow in the second overhead frame on the second PHY; and/or the feature information further includes an alignment marker AM phase, and the standby board is further configured to: determine, based on the AM phase, an AM phase of the service data flow in the second overhead frame on the second PHY

In a possible implementation of the second aspect, the standby board is further configured to: determine a frame header phase deviation between the main board and the standby board based on a frame header of a same overhead frame of the service data flow carried on the first PHY and the second PHY; and trigger alarm information when the frame header phase deviation is greater than a preset deviation.

According to still another aspect of this application, a readable storage medium is provided. The readable storage medium stores instructions. When the readable storage medium is executable on a device, the device is enabled to perform the method according to the first aspect or any one of the possible implementations of the first aspect.

According to yet another aspect of this application, a computer program product is provided. When the computer program product is executable on a computer, the computer is enabled to perform the method according to the first aspect or any one of the possible implementations of the first aspect.

It may be understood that the apparatus, the computer storage medium, or the computer program product of any flexible Ethernet overhead frame processing method provided above is configured to perform the corresponding method provided above. Therefore, for beneficial effects that can be achieved by the apparatus, the computer storage medium, or the computer program product, refer to beneficial effects of the corresponding method provided above. Details are not described herein again.

### BRIEF DESCRIPTION OF DRAWINGS

FIG. 1 is a schematic diagram of transmitting a service data flow by a protection switching mechanism;
FIG. 2 is a schematic diagram of a FlexE OH frame according to an embodiment of this application;
FIG. 3 is a schematic diagram of a FlexE group according to an embodiment of this application;
FIG. 4 is a schematic diagram of a 100GBASE-R FlexE multiplexer function according to an embodiment of this application;
FIG. 5 is a schematic diagram of a 100GBASE-R FlexE demultiplexer function according to an embodiment of this application;
FIG. 6 is a schematic diagram of an application scenario of a FlexE communication system according to an embodiment of this application;
FIG. 7 is a schematic flowchart of a flexible Ethernet overhead frame processing method according to an embodiment of this application;
FIG. 8 is a schematic diagram of encoding of first indication information according to an embodiment of this application;
FIG. 9 is a schematic flowchart of another flexible Ethernet overhead frame processing method according to an embodiment of this application;
FIG. 10 is a schematic diagram of determining a phase of a second overhead frame on a second PHY according to an embodiment of this application; and
FIG. 11 is a schematic structural diagram of a first network device according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces) " or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, in embodiments of this application, terms such as "first" and "second" are used for distinguishing between same objects or similar objects whose functions and purposes are basically the same. For example, a first threshold and a second threshold are merely used for distinguishing between different thresholds, and a sequence thereof is not limited. A person skilled in the art may understand that the terms such as "first" and "second" do not limit a number or an execution sequence

It should be noted that, in embodiments of this application, the terms such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

Before the technical solutions of this application are described, related technologies and concepts in embodiments of this application are first described.

In the Ethernet, an Ethernet port usually appears as a logical data-oriented concept and is referred to as a logical port or is briefly referred to as a port, and an Ethernet physical interface appears as a hardware concept and is referred to as a physical interface or is briefly referred to as an interface. Generally, a rate of the Ethernet port is determined based on a rate of the Ethernet physical port. Generally, a maximum bandwidth of an Ethernet port corresponds to the bandwidth of an Ethernet physical port. With the development and application of the Ethernet in a past period of time, a rate of an Ethernet port increases by 10 times, and continuously evolves and develops from 10 megabits per second (megabit per second, Mbps) to 100 Mbps, 1000 Mbps (that is, 1 Gbps), 10 Gbps, 40 Gbps, 100 Gbps, 400 Gbps, and the like. However, a bandwidth increase in an actual application requirement does not show such a 10-fold increase characteristic, for example, 50 Gbps, 75 Gbps, and 200 Gbps. As a result, a deviation between the rate of the Ethernet port and the expected rate increases. Therefore, the industry expects to provide some logical ports with flexible bandwidths. These logical ports may share one or more Ethernet physical interfaces. For example, two 40GE ports and two 10GE ports share one 100G physical interface. In addition, a rate can be flexibly adjusted as a requirement changes, for example, the rate is adjusted from 200 Gbps to 330 Gbps or from 50 Gbps to 20 Gbps, so as to improve usage efficiency of the port or prolong a usage life cycle of the port. Fixed-rate physical links may be cascaded and bundled to support a stack-based increase of a logical port rate (for example, two 100GE physical interfaces are stacked, cascaded, and bundled to support a 200GE logical port). In addition, the industry expects to use the bandwidth obtained by flexibly stacking physical interfaces as a resource pool, and the bandwidth in the resource pool is allocated to a particular Ethernet logical port based on a granularity (for example, 5G is one granularity), so that several Ethernet virtual connections can efficiently share a physical link group obtained through stacking and cascading.

Therefore, a concept of flexible Ethernet (flexible Ethernet, FlexE) emerges. The flexible Ethernet is also referred to as a flexible virtual Ethernet. The FlexE supports functions such as sub-rating, channelization, and inverse multiplexing of an Ethernet service. For example, in a sub-rating application scenario of an Ethernet service, the FlexE can support transmission of a 250G Ethernet service (a MAC bitstream) by three existing 100GE physical interfaces. In an inverse multiplexing scenario of an Ethernet service, the FlexE can support transmission of a 200G Ethernet service by two 100GE physical media dependent (physical medium dependent, PMD) sublayers. In a channelization scenario of an Ethernet service, the FlexE can support several logical ports in sharing one or more physical interfaces, and can support multiplexing a plurality of low-rate Ethernet services into high-rate flexible Ethernet. Introduction of these functions such as sub-rating, channelization, and inverse multiplexing of the FlexE greatly expands application scenarios of Ethernet, improves application flexibility of Ethernet, and makes the Ethernet technology gradually penetrate into a field of a transport network.

Based on the synchronous digital hierarchy (synchronous digital hierarchy, SDH) / optical transfer network (optical transfer network, OTN) technology, the FlexE constructs a fixed frame format for physical interface transmission and performs time division multiplexing (time division multiplexing, TDM) timeslot division. The following uses an existing FlexE frame format as an example for description. A TDM timeslot division granularity of the FlexE is 66 bits (bits), and correspondingly carries a 64B/66B bit block. As shown in FIG. 2, one FlexE frame includes eight flexible Ethernet overhead (FlexE overhead, FlexE OH) blocks (which may also be referred to as OH blocks, and each of the OH blocks is a 64B/66B bit block). A first FlexE OH block is a frame header location of the FlexE OH frame. A payload area between the FlexE OH blocks is to perform timeslot division, and a granularity of the payload area is 66 bits, corresponding to 1023 x 20 66-bit bearer spaces (that is, 1023 groups of slots, 20 slots per group, and 66 bits per slot). A bandwidth of a 100GE interface is divided into 20 slots, and the bandwidth of each of the slots is approximately 5 Gbps. FIG. 2 shows only a schematic diagram of two adjacent FlexE OH blocks in a FlexE frame and a payload area between the two FlexE OH blocks. FlexE implements a plurality of transmission channels on a single physical interface in an interleaved multiplexing manner. In other words, a plurality of slots are implemented. Several physical interfaces may be bound, and all slots of the physical interfaces may carry an Ethernet logical port in a combined manner. For example, 10GE requires two slots, and 25GE requires five slots. Sequentially transmitted 64B/66B bit blocks are visible on the logical port. Each logical port corresponds to one MAC, and transmits a corresponding Ethernet packet. Identification of a start and an end of the packet and identification of idle padding are the same as those in the conventional Ethernet. The FlexE is only an interface technology, and a related switching technology may be performed based on an existing Ethernet packet, or may be performed based on the FlexE in a cross manner. Details are not described herein.

In the FlexE technology, a flexible Ethernet slicing (FlexE shim) layer is introduced based on IEEE 802.3 to decouple a MAC layer from a physical layer, thereby implementing flexible rate matching. As shown in FIG. 3, the FlexE can bind one or more physical layer interfaces (physical layer, PHY) together to form a FlexE group (FlexE group), and transmit a plurality of FlexE clients (FlexE client) that are from different MAC layers by one FlexE group, so as to implement flexible matching of rates of Ethernet interfaces. In FIG. 3, an example in which four PHYs are bound together to form a FlexE group is used for description.

FlexE group: The FlexE group may also be referred to as a bundling group. A plurality of PHYs included in each FlexE group have a logical bundling relationship. The plurality of PHYs may be physically independent, and there is no physical connection relationship. A network device in FlexE may identify, by numbers of PHYs, specific PHYs included in a FlexE group, to implement logical bonding of a plurality of PHYs. For example, each PHY number may be identified by a number ranging from 1 to 254, and 0 and 255 are reserved numbers. A number of a PHY may correspond to a physical interface on the network device. Two adjacent network devices need to use a same number to identify a same PHY Numbers of PHYs included in the FlexE group do not need to be consecutive.

FlexE client: The FlexE client corresponds to various user interfaces of a network, and is consistent with a conventional service interface in an existing network such as an Internet protocol or an Ethernet. The FlexE client may be flexibly configured based on a bandwidth requirement, and support Ethernet MAC data flows at various rates. For example, the data flows may be transmitted to the FlexE shim in a 64B/66B encoding manner. The FlexE client may be interpreted as an Ethernet flow based on a physical address. Clients sent by a same FlexE group need to share a same clock, and these clients need to perform adaptation based on allocated timeslot rates.

FlexE shim: As an extra logical layer between the MAC and the PHY (a PCS sublayer), the FlexE shim implements a core architecture of the FlexE technology by a timeslot distribution mechanism based on a calendar (calendar). A main function of the FlexE shim is to slice data based on a same clock, and encapsulate the sliced data into slots obtained by partitioning in advance. Then, each slot obtained through division is mapped, based on a preconfigured timeslot configuration table, to a PHY in the FlexE group for transmission. Each slot is mapped to one PHY in the FlexE group.

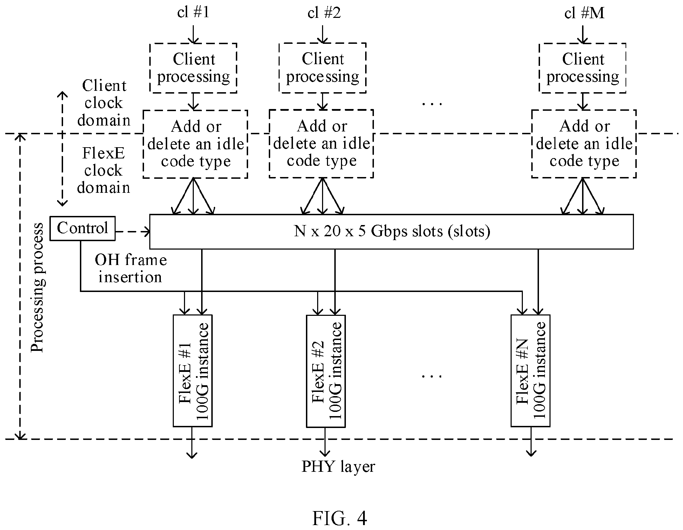

For example, for a transmit end, a 100GBASE-R FlexE multiplexer (mux) function shown in FIG. 4 is used as an example. For a plurality of data flows (which are respectively represented as cl#1 to cl#M) from a MAC layer (corresponding to a client clock domain (client clock domain)), after performing client processing (client processing) on the plurality of data flows, the plurality of data flows enter a FlexE shim (corresponding to a FlexE clock domain (FlexE clock domain)). A processing process of the FlexE shim on the plurality of data flows may include: For each data flow in the plurality of data flows, rate adaptation of the data flow is completed by adding or deleting an idle code type, that is, a rate of the data flow is adapted from a rate of a MAC to a rate of a PHY The plurality of rate-adapted data flows are mapped to slots of the FlexE shim to obtain calendar data flows, where a total bandwidth corresponding to the calendar data flows may be N x 20 x 5 Gbps; an OH frame (which may also be referred to as a FlexE frame or a FlexE OH frame) is inserted into a plurality of PHYs in a FlexE group; and distribute the calendar data flows to the plurality of PHYs. Data carried on each of the plurality of PHYs is mapped starting from a frame header location of an OH frame of the PHY, and transmission starts after the OH frame headers of the plurality of PHYs are aligned. The data carried on the plurality of PHYs may be respectively represented as a FlexE #1 100G instance (instance) to a FlexE #N 100G instance, and the instance may also be referred to as a sub-calendar (sub-calendar) data flow.

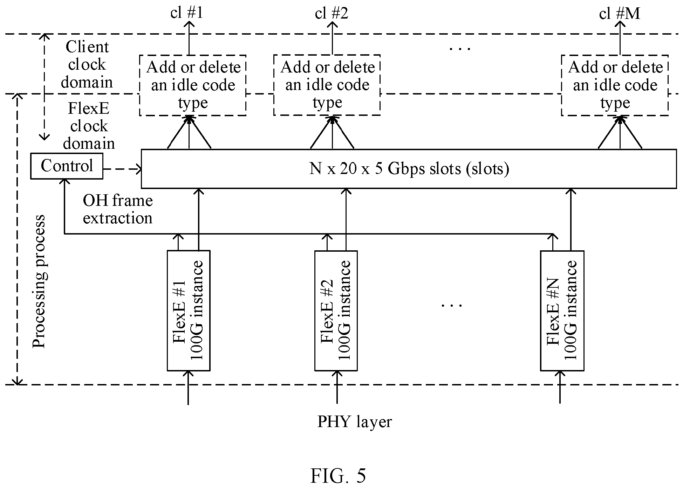

For example, for a receive end, a 100GBASE-R FlexE demultiplexer (demux) function shown in FIG. 5 is used as an example. A processing process of a FlexE shim may include: locking an OH frame on each PHY for a plurality of received sub-calendar data flows (which are respectively represented as a FlexE#1 100G instance to a FlexE#N 100G instance). Data on a plurality of PHYs in a same FlexE group is aligned based on a boundary of the OH frame. Phase deviations between the plurality of PHYs may be removed in an alignment process. The data on the plurality of PHYs is rearranged into a calendar data flow. A plurality of data flows are extracted from the calendar data flow by mapping information of the client. For each data flow in the plurality of data flows, rate adaptation of the data flow is completed by adding or deleting an idle code type, that is, a rate of the data flow is adapted from a rate of a PHY to a rate of a MAC, that is, a plurality of data flows (which are respectively represented as cl#1 to cl#M) are obtained.

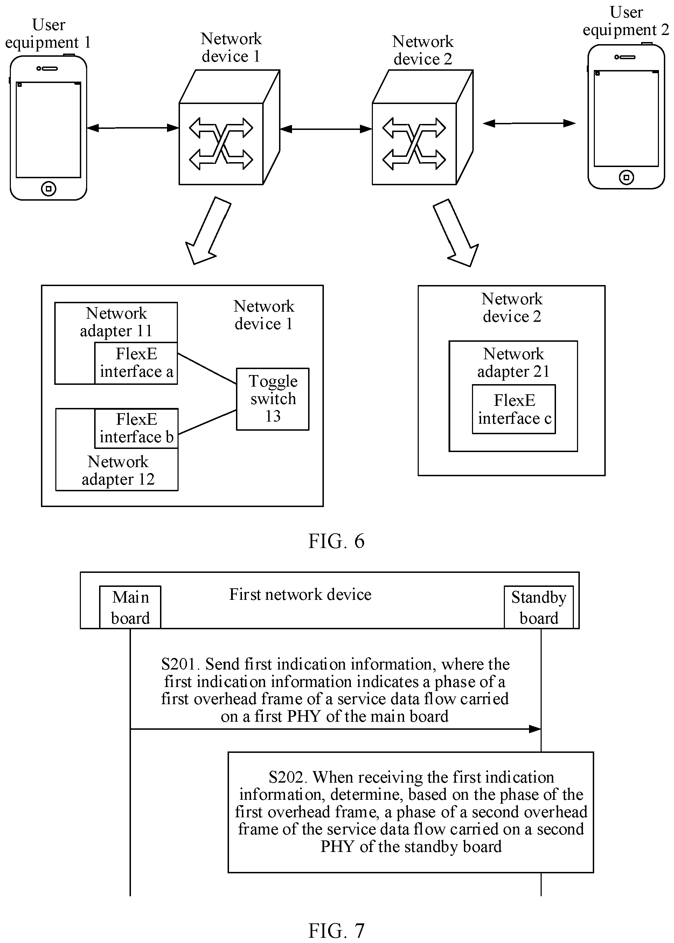

FIG. 6 shows a schematic diagram of an application scenario of a FlexE communication system according to this application. The FlexE communication system includes user equipment 1, a network device 1, a network device 2, and user equipment 2. The network device 1 and the network device 2 may be two network devices that are logically adjacent. The network device 1 may be an intermediate node, and in this case, the network device 1 is connected to the user equipment 1 by another network device; or the network device 1 is an edge node, and in this case, the network device 1 is directly connected to the user equipment 1. Similarly, the network device 2 may be an intermediate node, and in this case, the network device 2 is connected to the user equipment 2 by another network device; or the network device 2 is an edge node, and in this case, the network device 2 is directly connected to the user equipment 2.

The network device 1 may include a network adapter 11 and a network adapter 12 that are used as a main board and a standby board respectively, and a toggle switch 13 for switching the network adapter 11 and the network adapter. The network adapter 11 has a FlexE interface a, and the network adapter 12 has a FlexE interface b. The network device 2 includes a network adapter 21, and the network adapter 21 has a FlexE interface c. Each FlexE interface may also be referred to as a FlexE group. A difference from a conventional Ethernet interface lies in that one FlexE interface may carry a plurality of clients (client), and a FlexE interface used as a logical interface may include a plurality of physical interfaces. Optionally, one network adapter in each network device may have one or more FlexE interfaces, and the network device 2 may also include two network adapters that are separately used as a main board and a standby board. In FIG. 6, an example in which one network adapter has one FlexE interface and the network device 2 has one network adapter is used for description.

Specifically, it is assumed that the network device 1 is in a security assurance requirement, and the network adapter 11 is used as a main board and the network adapter 12 is used as a standby board, so as to implement protection of the main board and the standby board. In this way, a process in which the network device 1 communicates with the network device 2 by a protection switching mechanism may include: When the network device 1 sends data to the network device 2, the network adapter 11 and the network adapter 12 may send two data flows to the toggle switch 13 by a FlexE interface a and a FlexE interface b respectively. The two data flows are the same data. The toggle switch 13 selects one of the two data flows and sends the data flow to the network device 2. That is, the data sent by the network device 1 is selectively received at the toggle switch 13, that is, the data of the network adapter 11 or the network adapter 12 is selected to be sent to the network device 2. Generally, the data of the network adapter 11 (that is, the main board) is selected. When the network adapter 11 is faulty, the data of the network adapter 12 (that is, the standby board) is selected. When the network device 1 receives the data from the network device 2, the toggle switch 13 sends the received data to the network adapter 11 and the network adapter 12 respectively by the FlexE interface a and the FlexE interface b. That is, dual-sending of the received data is implemented on the toggle switch 13, so that both the network adapter 11 and the network adapter 12 receive the data.

It should be understood that the system shown in FIG. 6 is illustrated with only two user equipments and two network devices as an example. The FlexE communication system may further include more user equipments and network devices. This is not limited in embodiments of this application. The FlexE communication system shown in FIG. 6 is merely an example for description. An application scenario of the FlexE communication system provided in this application is not limited to the scenario shown in FIG. 6. The technical solutions provided in this application are applicable to all network scenarios in which data transmission is performed by a FlexE technology.

FIG. 7 is a schematic flowchart of a flexible Ethernet overhead frame processing method according to an embodiment of this application. The method is applied to a first network device including a main board and a standby board. For example, the first network device is the network device 1 shown in FIG. 6. The method includes the following several steps.

S201. A main board sends first indication information to a standby board, where the first indication information indicates a phase of a first overhead frame of a service data flow carried on a first PHY of the main board.

A first FlexE group (which may also be referred to as a first FlexE interface) may correspond to the main board and a network. The first FlexE group may include a plurality of PHYs, and the first PHY may be any one of the plurality of PHYs. The service data flow carried on the first PHY may include data of one or more clients. Specifically, in a process in which the main board is not faulty, and a first network device sends the service data flow to a second network device through the main board (that is, a toggle switch in the first network device selects data of the main board and sends the data to the second network device), the main board may send the first indication information to the standby board, where the first indication information indicates the phase of the first overhead frame of the service data flow carried on the first PHY of the main board. The first overhead frame may be an overhead frame (which may also be referred to as a FlexE frame) currently sent by the main board, and the phase of the first overhead frame may be a time domain location of the currently sent first overhead frame. For example, the time domain location may be a slot.

Optionally, the first indication information may include a frame header location of the first overhead frame. The first overhead frame may include eight overhead blocks. The frame header of the first overhead frame may be a first overhead block in the eight overhead blocks, and the frame header location is a time domain location of the first overhead block. Therefore, the phase of the first overhead frame may be the frame header location of the first overhead frame (or referred to as a time domain location of the first overhead block). Further, the first indication information may further include feature information of the first overhead frame, and specific information may include a padding block PAD phase and/or an alignment marker (alignment marker, AM) phase. The PAD and the AM are respectively used for rate matching and data alignment in the Ethernet. In a process of sending the service data flow, the PAD and the AM are inserted into the service data flow based on a specific rule. For example, the first network device may insert an overhead frame into the service data flow based on an interval a1, insert a PAD into the service data flow based on an interval a2, and insert an AM into the service data flow based on an interval a3. If phases of the overhead frame, the PAD, and the AM are aligned during initialization, after the service data flow is transmitted via a least common multiple of a1, a2, and a3, the phases of the overhead frame, the PAD, and the AM are aligned again. In this way, when receiving the service data flow, the second network device may implement data alignment based on any one of the overhead frame, the PAD, or the AM. It should be noted that for related descriptions of the PAD and the AM, refer to descriptions in a related technology. Details are not described herein again in embodiments of this application.

Specifically, in a process in which the first network device sends the first overhead frame by the main board, the main board may sample the first overhead frame, to determine the frame header location of the first overhead frame included in the first indication information. Further, the main board may further count a quantity of bit blocks (block) starting from the frame header location, to determine the quantity of bit blocks of the PAD and the AM relative to the frame header of the first overhead frame respectively, that is, the PAD phase and the AM phase that are in the first overhead frame and that are included in the first indication information is determined. Then, the main board may send the first indication information to the standby board.

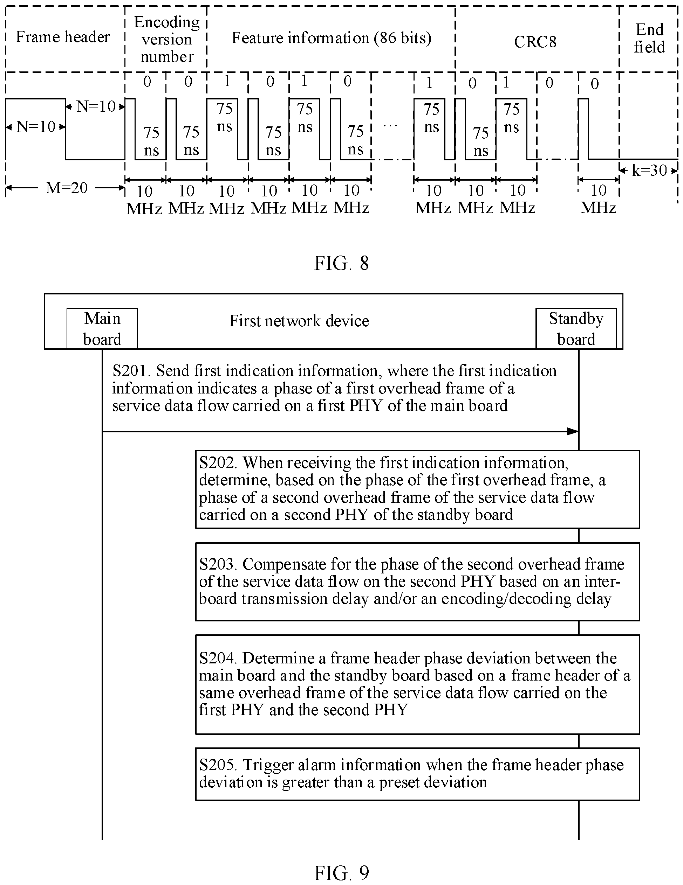

In a possible embodiment, the main board may further encode the first indication information by a single-bit encoding format. For example, as shown in FIG. 8, the main board may start encoding from a frame header position of the first overhead frame, and complete the encoding of the frame header through M (M is a positive integer) encoding periods (for example, an encoding frequency of 10 MHz is adopted, that is, one encoding period is 100 ns). The frame header may include a high electrical level of N periods and a low electrical level of N periods. For example, M is equal to 20 and N is equal to 10. In addition, as shown in FIG. 8, for other information in the first indication information (for example, the feature information of the first overhead frame), data "0" may be represented by an encoding manner of a high electrical level of a length of "x" and a high electrical level of a length of "y" in one encoding period, and data "1" may be represented by an encoding manner of a high electrical level of a length of "y" and a high electrical level of a length of "x" in one encoding period. For example, x is equal to 25 ns and y is equal to 75 ns. Further, when an encoding version used each time is different, the first indication information may further include an encoding version number; and the first indication information may further include a cyclic redundancy check CRC8. The CRC8 may be used to check the encoding version number and the feature information of the first overhead frame (for example, a length of 86 bits (bits)), to ensure security of the encoding version number and the feature information of the first overhead frame. In addition, the first indication information may further include an end field. For example, the end field may be a low electrical level of k encoding periods. For example, k is equal to 30.

S202. When the standby board receives the first indication information, the standby board determines, based on the phase of the first overhead frame, a phase of a second overhead frame of the service data flow carried on a second PHY of the standby board, where the second overhead frame is a next overhead frame of the first overhead frame.

A second FlexE group (which may also be referred to as a second FlexE interface) may correspond to the standby board and the network. The second FlexE group may include a plurality of PHYs, and the second PHY may be one of the plurality of PHYs that is used to carry the service data flow. In other words, the service data flow carried on the second PHY and the service data flow carried on the first PHY are a same service data flow. When the standby board receives the first indication information, the standby board may determine the phase of the first overhead frame based on the first indication information, to determine the phase of the second overhead frame of the service data flow on the second PHY based on the phase of the first overhead frame.

Specifically, when the first indication information includes the frame header location of the first overhead frame, the standby board may determine the frame header location of the second overhead frame of the service data flow on the first PHY based on the frame header location of the first overhead frame and an interval between two overhead frames (the interval is fixed, for example, the interval may be 163688 (that is, 20 x 1023 x 8 + 8) 64B/66B bit blocks). Then, the standby board may align the frame header location of the second overhead frame of the service data flow on the second PHY based on the frame header location of the second overhead frame on the first PHY For example, the frame header location of the second overhead frame on the first PHY is used as the frame header location of the second overhead frame of the data flow on the second PHY, that is, the phase of the second overhead frame of the service data flow on the second PHY is aligned. Further, when the first indication information further includes a PAD phase, the standby board may further determine a PAD phase of the second overhead frame of the service data flow on the second PHY based on the PAD phase. If the PAD phase is an interval between the PAD and the frame header of the first overhead frame, the standby board may determine the PAD phase of the second overhead frame on the second PHY based on the PAD phase, the interval between the two PADs, and the interval between the two overhead frames. Similarly, when the first indication information further includes an AM phase, the standby board may further determine an AM phase of the service data flow in the second overhead frame on the second PHY based on the AM phase. If the AM phase is an interval between the AM and the frame header of the first overhead frame, the standby board may determine the AM phase of the second overhead frame on the second PHY based on the AM phase, the interval between the two AMs, and the interval between the two overhead frames. In this way, the standby board can ensure, based on the foregoing manner, that the PAD phase and the AM phase of the second overhead frame on the first PHY of the main board are respectively aligned with the PAD phase and the AM phase of the second overhead frame on the second PHY of the standby board, thereby ensuring consistency of insertion of the PAD and the AM by the main board and the standby board.

In a possible embodiment, when the main board encodes the first indication information by a single-bit encoding format, the standby board may decode the first indication information when receiving the first indication information, so as to obtain the related information in the first indication information. For example, taking the encoding manner shown in FIG. 8 as an example, the standby board may start decoding after detecting that a signal of the data flow from the main board jumps upward. When detecting that the signal jumps downward after continuously receiving a high electrical level of N periods, determine that the position of the downward jump is the frame header position of the first overhead frame. Then, a low electrical level of N periods is detected continuously. If the low electrical level of N consecutive periods is detected, the frame header location of the first overhead frame is correct. If the low electrical level of the N consecutive periods is not detected, the frame header location of the first overhead frame is re-determined. Further, the standby board may separately decode an encoding version number, feature information (for example, a PAD phase and an AM phase) of the first overhead frame, CRC8, and the like based on an encoding manner of the data "0" and the data "1", where the encoding version number may be used to indicate an encoding version, so that the standby board may identify a difference between different encoding versions based on the encoding version number. Correspondingly, the standby board may further check the feature information of the first overhead frame based on the CRC8. If the check succeeds, it is determined that the feature information of the first overhead frame is correct. If the check fails, the standby board starts to detect the first indication information again. Finally, when the standby board detects the end field, for example, detects a low electrical level of k (for example, k=30) encoding periods, the standby board may determine that decoding of the first indication information is completed.

It should be noted that, when the standby board detects the low electrical level of the N periods or the high electrical level of the N periods, signal jitter occurs due to impact of inter-board cabling, and the like. Therefore, a period in which the low electrical level or the high electrical level is actually detected is greater than or less than N, for example, the number of detected periods is N+1 or N-1. Therefore, as long as an absolute value of a difference between N and the number of periods in which the low electrical level is detected is less than a preset threshold, it may be considered that the low electrical level of the N periods or the high electrical level of the N periods is detected.

Further, as shown in FIG. 9, the method may further include S203.

S203. The standby board compensates for the phase of the second overhead frame of the service data flow on the second PHY based on an inter-board transmission delay and/or an encoding/decoding delay.

The inter-board transmission delay may be a transmission delay of transmitting the phase of the first overhead frame (for example, the frame header location of the first overhead frame) from the main board to the standby board. The inter-board transmission delay may be measured in advance by an external hardware device such as an oscilloscope and then configured for the standby board. Therefore, when the phase of the second overhead frame on the second PHY needs to be compensated, the standby board may directly obtain the inter-board transmission delay based on a corresponding configuration. In addition, the encoding/decoding delay includes an encoding delay and a decoding delay, where the encoding delay refers to a delay when the main board encodes the phase of the first overhead frame, and the decoding delay refers to a delay when the standby board decodes the phase of the first overhead frame. The encoding delay and the decoding delay may be obtained in advance by measurement, and may be configured for the standby board.

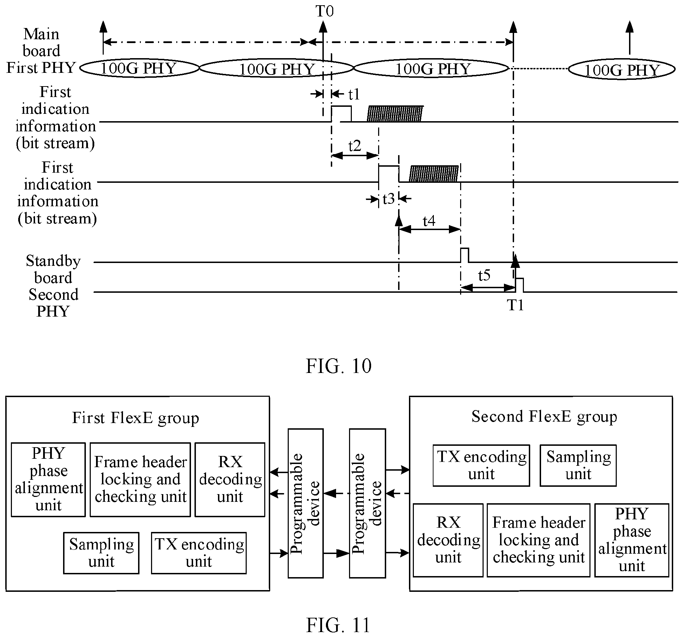

Specifically, when the first indication information includes the frame header location of the first overhead frame, the determining, by the standby board, a phase of a second overhead frame of the service data flow on a second PHY when the main board sends the first indication information obtained after the single-bit encoding to the standby board may include: determining the phase of the second overhead frame of the service data flow on the second PHY based on the frame header location of the first overhead frame, the encoding delay, the inter-board transmission delay, the decoding delay, the transmission delay of the feature information of the first overhead frame, and an overhead frame interval, where the phase of the second overhead frame is the frame header location of the second overhead frame. For example, as shown in FIG. 10, the first PHY and the second PHY are 100G PHYs. If the frame header of the first overhead frame on the first PHY is T0, the encoding delay is t1, the inter-board transmission delay is t2, the decoding delay is t3, the transmission delay of the feature information of the first overhead frame is t4 (t4 is less than an interval of overhead frames), and the interval of overhead frames is Δt, in this case, the standby board determines that the phase of the second overhead frame on the first PHY is T1 (for example, T1=T0+ Δt-t1-t2-t3-t4), so as to determine that the phase of the second overhead frame on the second PHY is T1. The t5= Δt-t1-t2-t3-t4 in FIG. 10 is an actual interval between the first overhead frame and the second overhead frame after the phase of the first overhead frame is compensated.

After the standby board determines, in the foregoing manner, the phase of the second overhead frame of the service data flow on the second PHY, phases of a same overhead frame of the service data flow on the first PHY and the second PHY may be aligned, or it may be understood that the phase of the overhead frame of the service data flow on the second PHY is tracked and aligned with the phase of the overhead frame of the service data flow on the first PHY In this way, when the main board is faulty, the first network device may send the service data flow to the second network device by the standby board. For example, the standby board sends the service data flow on the second PHY at the phase of the aligned second overhead frame. Because the phases of the overhead frames of the service data flows sent by the main board and the standby board are aligned, when the main board is faulty and the second network device receives the service data flow sent by the standby board, the second network device may still lock the overhead frames of the service data flows, and implement data alignment in a plurality of PHYs based on the locked overhead frames, so as to extract the data of the client from the aligned data. Optionally, when the first indication information further includes a PAD phase or an AM phase of the first overhead frame, the second network device may implement data alignment in a plurality of PHYs based on the PAD phase or the AM phase.

It should be noted that, for a specific process in which the second network device locks the overhead frame, implements data alignment in the plurality of PHYs based on the locked overhead frame, and extracts the data of the client from the aligned data, refer to related descriptions in the prior art. Details are not described in embodiments of this application again.

Further, as shown in FIG. 9, the method may further include S204 and S205. There may be no specific sequence between S201 to S203 and S204 and S205. In FIG. 9, an example in which S204 and S205 are after S203 is used for description.

S204. The standby board determines a frame header phase deviation between the main board and the standby board based on a frame header of a same overhead frame of the service data flow carried on the first PHY and the second PHY

The standby board may be configured to detect a phase deviation between frame headers of a same overhead frame of the service data flow on the main board and the standby board. For example, the standby board may be integrated with a counter. The counter may be configured to start counting at a frame header position of a specific overhead frame on the main board determined by the standby board, and stop counting at the frame header position of a same overhead frame on the standby board (or the frame header position of a same overhead frame on the standby board obtained by calculation). An accumulated value of the counter is a phase deviation between frame headers of the same overhead frame of the service data flow on the main board and the standby board. For example, in a scenario in which the first overhead frame of the main board is earlier than the first overhead frame of the standby board, the counter first starts counting when "the frame header of the first overhead frame on the main board is calculated by the standby board", and then stops counting when the frame header of the first overhead frame on the standby board arrives. The accumulated value corresponding to the counter is the frame header phase deviation.

S205. The standby board triggers alarm information when the frame header phase deviation is greater than a preset deviation.

For example, the preset deviation is 5 ns, and the phase deviation obtained by the standby board via the calculator is 7 ns. In this case, the standby board may send the alarm information to a processor in the first network device, so that the overhead frame is realigned between the main board and the standby board. The preset deviation may be set in advance. For example, the preset deviation may be determined based on an alignment capability of a toggle switch that is in the first network device and that is used to switch the main board and the standby board. This is not specifically limited in embodiments of this application.

For ease of understanding, the following uses a structure of the first network device shown in FIG. 11 as an example to describe the method provided in embodiments of this application. It is assumed that the FlexE group between the main board and the network is a first FlexE group (which may also be referred to as a working group (working group)), and the FlexE group between the standby board and the network is a second FlexE group (which may also be referred to as a backup group (backup group)). The first FlexE group and the second FlexE group may include a receiving (receive, RX) and decoding (decode) unit, a frame header locking and checking unit, a PHY phase alignment unit, a transmitting (transmit, TX) and coding (code) unit, and a sampling unit. The main board and the standby board may also be connected to a programmable device respectively, and are configured to compile or decode data exchanged between the main board and the standby board. Specifically, using an example in which the main board sends the first indication information to the standby board, a sampling unit in the main board may be configured to sample a frame header of a first overhead frame of a service data flow carried on a first PHY in a first FlexE group; a TX encoding unit in the main board may be configured to encode the sampled frame header of the first overhead frame and send the encoded frame header to the standby board; and an RX decoding unit in the standby board may decode received data. The frame header locking and checking unit in the standby board may lock the frame header of the first overhead frame based on the decoded data, and check a frame header phase deviation of a same overhead frame in the main board and the standby board. A PHY phase alignment unit in the standby board may be configured to align the frame header of the second overhead frame of the standby board based on the frame header of the first overhead frame.

It should be noted that the main board and the standby board in embodiments of this application may be interchanged. For example, when the standby board is upgraded to the main board, the standby board may also send a phase of a currently sent overhead frame to the main board, so that the main board tracks and aligns the phase of the overhead frame of the standby board. The foregoing description is provided only by an example in which the standby board tracks and aligns the phase of the overhead frame of the main board. The technical solution provided in embodiments of this application is also applicable to a solution in which the main board tracks and aligns the phase of the overhead frame of the standby board, and details are not described herein again.

In embodiments of this application, the main board sends first indication information to the standby board, where the first indication information indicates a phase of a first overhead frame of the service data flow on the main board. When receiving the first indication information, the standby board may determine a phase of a second overhead frame of the service data flow on the standby board based on the phase of the first overhead frame, so that the phase of the overhead frame of the service data flow on the standby board is tracked and aligned with the phase of the overhead frame of the service data flow on the main board. In this way, when the main board is faulty, the first network device may send the service data flow to the second network device through the standby board. Because the phases of the overhead frames of the service data flows sent by the main board and the standby board are aligned, the second network device may still lock the overhead frames in the service data flows, thereby reducing impact of damage to service data flows on other PHYs that work normally due to a fault of a PHY in the main board.

The above mainly describes the methods provided in embodiments of this application from a perspective of the first network device. It may be understood that, to implement the foregoing functions, the first network device includes a corresponding hardware structure and/or software module for implementing each function. A person of ordinary skill in the art should easily be aware that, in combination with the examples described in embodiments disclosed in this specification, network elements, algorithms and steps may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, function modules of the first network device may be obtained through division based on the foregoing method examples. For example, each function module may be obtained through division for each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

Embodiments of this application provide a first network device. A schematic structural diagram of the first network device may be shown as a network device 1 in FIG. 6. The first network device includes a network adapter 11 and a network adapter 12. The network adapter 11 may serve as a main board, and the network adapter 12 may serve as a standby board. The network adapter 11 is configured to support the first network device in performing S201 in the foregoing method embodiment. The network adapter 12 is configured to support the first network device in performing one or more of S202 to S205 in the foregoing method embodiment, and/or is used in another process of the technology described in this specification. Further, the first network device further includes a toggle switch 13. The toggle switch 13 is configured to support the first network device in selecting, when the network adapter 11 is not faulty, data sent by the network adapter 11 to the second network device, and selecting, when the network adapter 11 is faulty, data sent by the network adapter 12 to the second network device. All related content of each step involved in the foregoing method embodiment may be referenced to a function description of a corresponding functional module, and details are not described herein again.

In the several embodiments provided in this application, it should be understood that the disclosed apparatuses and methods may be implemented in other manners. For example, the described apparatus embodiments are merely examples. For example, division into the modules or units is merely logical function division, and may be other division during an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing the terminal to perform all or some of the steps of the methods described in the embodiments of this application. The foregoing storage medium includes any medium that can store program code, such as a USB flash drive, a removable hard disk, a ROM, a RAM, a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A flexible Ethernet overhead frame processing method, applied to a network device comprising a main board and a standby board, wherein the method comprises:
sending, by the main board, first indication information to the standby board, wherein the first indication information indicates a phase of a first overhead frame of a service data flow carried on a first physical layer interface PHY of the main board; and
receiving, by the standby board, the first indication information, and determining, based on the phase of the first overhead frame, a phase of a second overhead frame of the service data flow carried on a second PHY of the standby board, wherein the second overhead frame is a next overhead frame of the first overhead frame.

2. The method according to claim 1, wherein the method further comprises:
sending, by the main board, the service data flow on the first PHY at the phase of the first overhead frame when the main board is not faulty; or
sending, by the standby board, the service data flow on the second PHY at the phase of the second overhead frame when the main board is faulty.

3. The method according to claim 1 or 2, wherein the first indication information is information encoded in a single-bit encoding format.

4. The method according to any one of claims 1 to 3, wherein the first indication information comprises a frame header location of the first overhead frame.

5. The method according to claim 4, wherein the determining, by the standby board based on the phase of the first overhead frame, a phase of a second overhead frame of the service data flow carried on a second PHY of the standby board comprises:
determining, by the standby board based on the frame header location of the first overhead frame and an overhead frame interval, a frame header location of the second overhead frame on the first PHY; and
determining, based on the frame header location of the second overhead frame on the first PHY, the phase of the second overhead frame of the service data flow carried on the second PHY that is on the standby board.

6. The method according to any one of claims 1 to 5, wherein the method further comprises:
compensating, by the standby board based on an inter-board transmission delay and/or an encoding/decoding delay, for the phase of the second overhead frame of the service data flow carried on the second PHY that is on the standby board.

7. The method according to any one of claims 1 to 6, wherein the first indication information further comprises at least one of the following: an encoding version number or feature information of the first overhead frame.

8. The method according to claim 7, wherein the first indication information further comprises a cyclic redundancy check code, and the cyclic redundancy check code is used to check the encoding version number and/or the feature information of the first overhead frame.

9. The method according to claim 7 or 8, wherein the feature information comprises a padding block PAD phase, and the method further comprises: determining, based on the PAD phase, a PAD phase of the service data flow in the second overhead frame on the second PHY; and/or
the feature information further comprises an alignment marker AM phase, and the method further comprises: determining, based on the AM phase, an AM phase of the service data flow in the second overhead frame on the second PHY

10. The method according to any one of claims 1 to 9, wherein the method further comprises:
determining, by the standby board, a frame header phase deviation between the main board and the standby board based on a frame header of a same overhead frame of the service data flow carried on the first PHY and the second PHY; and
triggering, by the standby board, alarm information when the frame header phase deviation is greater than a preset deviation.

11. A flexible Ethernet overhead frame processing apparatus, wherein the apparatus comprises a main board and a standby board, wherein
the main board is configured to send first indication information to the standby board, wherein the first indication information indicates a phase of a first overhead frame of a service data flow carried on a first physical layer interface PHY of the main board; and
the standby board is configured to receive the first indication information, and determine, based on the phase of the first overhead frame, a phase of a second overhead frame of the service data flow carried on a second PHY of the standby board, wherein the second overhead frame is a next overhead frame of the first overhead frame.

12. The apparatus according to claim 11, wherein
the main board is further configured to send, by the main board, the service data flow on the first PHY at the phase of the first overhead frame when the main board is not faulty; or
the standby board is further configured to send, by the standby board, the service data flow on the second PHY at the phase of the second overhead frame when the main board is faulty.

13. The apparatus according to claim 11 or 12, wherein the first indication information is information encoded in a single-bit encoding format.

14. The apparatus according to any one of claims 11 to 13, wherein the first indication information comprises a frame header location of the first overhead frame.

15. The apparatus according to claim 14, wherein the standby board is further configured to:
determine, based on the frame header location of the first overhead frame and an overhead frame interval, a frame header location of the second overhead frame on the first PHY; and
determine, based on the frame header location of the second overhead frame on the first PHY, the phase of the second overhead frame of the service data flow borne on the second PHY that is on the backup board.

16. The apparatus according to any one of claims 11 to 15, wherein the standby board is further configured to:
compensate, based on an inter-board transmission delay and/or an encoding/decoding delay, for the phase of the second overhead frame of the service data flow carried on the second PHY

17. The apparatus according to any one of claims 11 to 16, wherein the first indication information further comprises at least one of the following: an encoding version number or feature information of the first overhead frame.

18. The apparatus according to claim 17, wherein the first indication information further comprises a cyclic redundancy check code, and the cyclic redundancy check code is used to check the encoding version number and/or the feature information of the first overhead frame.

19. The apparatus according to claim 17 or 18, wherein the feature information comprises a padding block PAD phase, and the standby board is further configured to determine, based on the PAD phase, a PAD phase of the service data flow in the second overhead frame on the second PHY; and/or
the feature information further comprises an alignment marker AM phase, and the standby board is further configured to determine, based on the AM phase, an AM phase of the service data flow in the second overhead frame on the second PHY

20. The apparatus according to any one of claims 11 to 19, wherein the standby board is further configured to:
determine a frame header phase deviation between the main board and the standby board based on a frame header of a same overhead frame of the service data flow carried on the first PHY and the second PHY; and
trigger alarm information when the frame header phase deviation is greater than a preset deviation.
